# EUROPÄISCHE PATENTANMELDUNG

(11) **EP 0 692 518 A1**
(43) Veröffentlichungstag der Anmeldung: **17.01.1996**
(21) Anmeldenummer: 95110225.0
(22) Anmeldetag: 30.06.1995
(51) Int. Cl.: C08K 5/5398, C08L 21/00

(54) **Beschleunigergemische**

(30) Priorität: 13.07.1994 DE 4424681
(71) Anmelder: RHEIN-CHEMIE RHEINAU GmbH, D-68219 Mannheim (DE)
(72) Erfinder: Graf, Hans-Joachim, Dr., D-68219 Mannheim (DE); Schäfer, Volker, Dr., D-67122 Altrip (DE); Schulz, Hartmut, Dr., D-69121 Heidelberg (DE); Schmidt, Erich, D-68642 Bürstadt (DE); Issel, Hans-Martin, Dr., D-68723 Schwetzingen (DE); Voss, Hans-Dieter, D-68782 Brühl (DE); Kleinknecht, Harald, D-55232 Alzey (DE); Schweiger, Manfred, D-68642 Bürstadt (DE)
(74) Vertreter: Gremm, Joachim, Dr.

(57) **Zusammenfassung**

Verfahren zum Auffinden und zur Optimierung von Vulkanisationsbeschleunigern auf der Basis von C₆-C₁₂-Alkyldithiophosphaten für die Vulkanisation unpolarer Kautschuke, wobei man ein C₆-C₁₂-Alkyldithiophosphat mit einer Verbindung aus der Gruppe Sulfenamide, Thiazole oder Carbamate mischt, die Löslichkeit der Mischung im unpolaren Kautschuk und die Vulkanisationskinetik des Beschleunigers im Vergleich zu einem Standardbeschleuniger experimentell optimiert und gegebenenfalls eine weitere Verbindung aus der Gruppe Sulfenamide, Thiazole oder Carbamate zufügt.

## Beschreibung

Die Vernetzung Von Kautschuken, die in der Haupt- oder Seitenkette Doppelbindungen enthalten, ist mit Schwefel oder mit Schwefelspendern möglich. Im folgenden schließt die Nennung von Schwefel immer auch andere Schwefelspender ein. Das Vernetzungsverfahren wird auch Vulkanisation genannt. Der Schwefel (oder Schwefelspender) wird dabei zusammen mit einem Vulkanisationsbeschleuniger eingesetzt. Diese Beschleuniger können aus einer einzigen oder aus mehreren Chemikalien bestehen.

Die Menge des Vulkanisationsbeschleunigers im Verhältnis zum Schwefel und gleichzeitig im Verhältnis zur Menge der Doppelbindungen im eingesetzten Kautschuk, bestimmt die Vernetzungsgeschwindigkeit und die Netzwerkstruktur. Diese wiederum bestimmt die physikalischen Eigenschaften und die Alterungsbeständigkeit des Vulkanisats.

Besonders problematisch ist die Bestimmung der Menge des erforderlichen Beschleunigers für unpolare Kautschuke, beispielsweise EPDM-Kautschuk. Bisher mußte man hier zur Erreichung befriedigender Vulkanisateigenschaften die Menge des Beschleunigers so groß wählen, daß dessen Löslichkeitsgrenze überschritten wurde. Dies hat Ausblühen zur Folge; die dynamische Beständigkeit von Vulkanisatformkörpern wird u. a. beeinträchtigt.

Die meisten Chemikalien, die in üblichen Beschleunigern verwendet werden, führen zur Bildung von N-Nitrosaminen, denn ihre Spaltprodukte sind meist sekundäre Amine, die im Kautschuk selbst oder in dem umgebenden Gasraum mit nitrosierenden Agenzien (NOₓ) zu stabilen, carcinogenen N-Nitrosaminen reagieren.

Bisher sind nur wenige Beschleuniger bekannt, die nicht carcinogen und hinreichend im unpolaren Kautschuk löslich sind.

Bekannt ist auch bereits, daß mit Dithiophosphaten lösliche (= ausblühfreie) Beschleunigergemische erhalten werden können, die allerdings zur Bildung von carcinogenen N-Nitrosaminen führen.

Ziel der Erfindung ist, Beschleunigergemische zu finden, die keine gefährlichen N-Nitrosamine und keine oder deutlich weniger toxikologisch bedenkliche Vulkanisatdämpfe bilden, die eine Vulkanisationskinetik analog zu Standardsystemen zeigen und Vulkanisate mit physikalischen Eigenschaften entsprechend den mit Standardsystemen erhaltenen ergeben.

Gegenstand der Erfindung ist ein Verfahren zum Auffinden und zur Optimierung von Vulkanisationsbeschleunigern auf der Basis von C₆-C₁₂-Alkyldithiophosphaten für die Vulkanisation unpolarer Kautschuke, das dadurch gekennzeichnet ist, daß man ein C₆-C₁₂-Alkyldithiophosphat mit einer Verbindung aus der Gruppe Sulfenamide, Thiazole und Carbamate mischt, die Löslichkeit der Mischung im unpolaren Kautschuk und die Vulkanisationskinetik des Beschleunigers im Vergleich zu einem Standardbeschleuniger experimentell optimiert und gegebenenfalls eine weitere bisher nicht benutzte Verbindung aus der Gruppe Sulfenamide, Thiazole und Carbamate zufügt.

Im einzelnen können C₆-C₁₂-Alkyldithiophosphate mit an sich bekannten Verbindungen, die selbst Beschleunigerwirkung haben, gemischt werden und die Wirkung dieser Gemische bezüglich Vulkanisationskinetik und Vulkanisationseigenschaften getestet werden. Dazu ist es notwendig statistische Versuchsplanungsmethoden als Hilfsmittel anzuwenden.

Es wird zunächst ein bekannter Beschleuniger aus den Substanzklassen Sulfenamide, Thiazole und Carbamate als Hauptbeschleuniger ausgewählt und dann das optimale Mengenverhältnis dieses ausgewählten Beschleunigers zu den Dithiophosphaten, vorzugsweise einer Mischung von Zinkalkyldithiophosphat mit Zinkalkyldithiophosphatamingemisch bestimmt. Dieses Gemisch wird dann um einen weiteren (bekannten) Beschleuniger aus einer anderen als der bereits verwendeten genannten Substanzklasse erweitert. Beispielsweise wurde zum Hauptbeschleuniger Sulfenamid ein Thiazol hinzugefügt. Das Ergebnis ist dann eine Kombination aus Sulfenamid, Thiazol und dem Dithiophosphatgemisch.

Parallel dazu wurde die Löslichkeit der bekannten Beschleuniger in EPDM-Kautschuk bestimmt, da bisher hierzu keine verläßlichen Daten vorliegen. Daraus ergibt sich die Konzentrationsgrenze für jeden einzelnen Beschleuniger, die nicht überschritten werden darf, wenn die Beschleunigergemische keine Ausblühungen verursachen sollen (was sich als Film auf der Vulkanisatoberfläche zeigt). Ausblühungen stören bei der weiteren Verarbeitung oder Bearbeitung von Vulkanisaten.

Die so erhaltenen erfindungsgemäßen Beschleunigerpakete können in ein Vernetzungssystem bestehend aus Schwefel (und/oder Schwefelspender), Beschleunigerpaket und Zusatzbeschleuniger eingebracht und getestet werden, wobei die Mengenverhältnisse von Vernetzer, Beschleunigerpaket und Zusatzbeschleuniger variiert werden können, um das optimale Mengenverhältnis herauszufinden.

Als Ergebnis können Beschleunigerpakete angegeben werden, die im Zusammenwirken mit Schwefel und einem Zusatzbeschleuniger langsame, mittelschnelle und schnelle Vulkanisationsgeschwindigkeit zeigen. Damit läßt sich jede gewünschte Vulkanisationscharakteristik nachstellen, die mit entsprechend ausgewählten Standardsystemen erreicht wird. Der Einfluß eines Beschleunigersystems auf die Vulkanisateigenschaften ist marginal. Entscheidend ist der Einfluß des Beschleunigersystems auf die Vulkanisationsgeschwindigkeit, von der wiederum die Verarbeitbarkeit einer Kautschukmischung nach einem vorgegebenen Verarbeitungsverfahren abhängt.

Im direkten Vergleich der Beschleunigersysteme zu Standardsystemen (Bestätigungsexperiment) kann gezeigt werden, daß die Vulkanisateigenschaften, die mit den erfindungsgemäßen Beschleunigern erhalten werden, denen der Standardsysteme voll entsprechen und daß die Vulkanisationsgeschwindigkeiten ebenfalls denen der Standardsysteme angepaßt werden können.

### Beispiel

In der Tabelle 1 sind Beschleunigerpakete auf Basis Sulfenamid (hier Cyclohexylsulfenamid (CBS)) angegeben. Die Zahlen sind Gewichtsteile.

**Tabelle 1**

| Beschleuniger | AP 1 | AP 2 | AP 3 | AP 4 |
|---|---|---|---|---|
| N-Cyclohexyl-2-benzothiazolsulfenamid | 1,92 | 1,92 | 1,92 | 0,96 |
| N-tert.-Butyl-2-enzothiazolsulfenamid | - | - | - | 0,96 |
| Dibenzothiazoldisulfid | - | 1,28 | 0,96 | 1,28 |
| Zinkdi-2-ethylhexyldithiophosphat | 1,07 | 1,07 | 0,8 | 1,07 |

Diese Beschleunigerpakete werden zusammen mit Schwefel und einem Zweitbeschleuniger eingesetzt. Die Zahlenangaben sind wieder Gewichtsteile.

**Tabelle 2**

| Anwendungsbeispiel | 1 | 2 | 3 | 4 |
|---|---|---|---|---|
| Schwefel (80 %) | 1,6 | 1,6 | 0,5 | 1,6 |
| Dithiocaprolactam (80 %) | - | - | 1 | - |
| Beschleunigerpaket (80 %) | 4 | 5,6 | 4,8 | 5,6 |
| Zinkamindi-2-ethylhexyldithiophosphat (50 %) | 2,4 | 2,4 | 1 | 2,4 |

In der Tabelle 3 sind Beschleunigerpakete auf Basis eines Thiazols angegeben. Die Zahlenangaben sind Gewichtsteile.

**Tabelle 3**

| Beschleunigerpaket | AP 5 | AP 6 |
|---|---|---|
| Dithiocaprolactam | - | 0,88 |
| Dibenzothiazoldisulfid | 3,20 | 3,2 |
| Zinkdi-2-ethylhexyldithiophosphat | 0,85 | 0,35 |

Diese Beschleunigerpakete werden zusammen mit Schwefel und einem Zweitbeschleuniger eingesetzt.

**Tabelle 4**

| Beispiel | 5 | 6 |
|---|---|---|
| Schwefel 80 % | 1,2 | 1,4 |
| Beschleunigerpaket 80 % | 5,7 | 5,8 |
| Zinkdiamindi -2-ethylhexyldithiophosphat | 2,3 | 2,7 |

## Patentansprüche

1. Verfahren zum Auffinden und zur Optimierung von Vulkanisationsbeschleunigern auf der Basis von C₆-C₁₂-Alkyldithiophosphaten für die Vulkanisation unpolarer Kautschuke, dadurch gekennzeichnet, daß man ein C₆-C₁₂-Alkyldithiophosphat mit einer Verbindung aus der Gruppe Sulfenamide, Thiazole oder Carbamate mischt, die Löslichkeit der Mischung im unpolaren Kautschuk und die Vulkanisationskinetik des Beschleunigers im Vergleich zu einem Standardbeschleuniger experimentell optimiert und gegebenenfalls eine weitere Verbindung aus der Gruppe Sulfenamide, Thiazole oder Carbamate zufügt.

2. Verfahren zum Auffinden und zur Optimierung der nach Anspruch 1 aufgeführten Beschleunigergemische, dadurch gekennzeichnet, daß die Gemische im Mengenverhältnis zum Schwefel/ -Spender und einem Zusatzbeschleuniger experimentell optimiert werden.
